# EUROPEAN PATENT SPECIFICATION

(11) **EP 3 872 792 B1**
(45) Date of publication and mention of the grant of the patent: **26.08.2026**
(21) Application number: 21151429.4
(22) Date of filing: 13.01.2021
(51) Int. Cl.: H04N 5/262

(54) **IMAGE CAPTURE CONTROL SYSTEM, METHOD AND COMPUTER PROGRAM PRODUCT**
BILDAUFNAHMESTEUERUNGSSYSTEM, VERFAHREN UND COMPUTERPROGRAMMPRODUKT
SYSTÈME DE COMMANDE DE CAPTURE D'IMAGE, PROCÉDÉ ET PRODUIT PROGRAMME INFORMATIQUE

(30) Priority: 26.02.2020 GB 202002679
(43) Date of publication of application: 01.09.2021
(73) Proprietor: Sony Europe B.V., Weybridge, Surrey KT13 0XW (GB); Sony Group Corporation, Tokyo 108-0075 (JP)
(72) Inventor: WILLIAMS, Michael John, Basingstoke, Hampshire RG22 4SB (GB); LEWIS, Gareth, Basingstoke, Hampshire RG22 4SB (GB); TREPESS, David, Basingstoke, Hampshire RG22 4SB (GB); BIRTLES, Alan, Basingstoke, Hampshire RG22 4SB (GB); COX, Garry, Basingstoke, Hampshire RG22 4SB (GB)
(74) Representative: D Young & Co LLP

(56) References cited:
- US-A1- 2007 081 080
- US-A1- 2012 124 602

## Description

### BACKGROUND

### Field of the Disclosure

The present invention relates to an image capture control system, method and computer program product.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

Image capture devices have a wide variety of potential applications. Image capture devices may be used in order to capture or record visual information about a scene or imaging environment. Alternatively, image capture devices may be used in order to enable users to exchange visual information over a computing network or the like. In fact, image capture devices have a wide range of applications in personal, industrial and educational environments.

Conventional image capture devices, such as cameras and scanners, typically require a human operator to select the appropriate image capture settings for a specific situation and a specific environment. Moreover, many image capture devices are quite complex, and require a significant amount of attention in order to operate. This limits the ability of a user to perform other task while operating the image capture device. As such, there are many situations where image capture devices are not fully utilized.

Moreover, image capture devices can produce significant amounts of image data. Given the computational intensity of certain image processing functions, it can be difficult to efficiently analyse and store the image data which is produced by modem image capture devices.

These shortcomings of modem image capture devices are exacerbated in complex and dynamic image capture environments.

In US2007/0081080 a camera control system is described that permits a tracking camera to follow a presenter using triggers at preset locations and motion detection by a reference camera.

In US 2012/124602 A1, a method for presentation interaction is provided. The method includes, receiving by a computer system an indication of a manual selection of a region proximate to an audience member of an audience wherein the indication is received via an interaction with a displayed image of the audience. The method also includes utilizing a microphone array communicatively coupled with a beam-forming component of the computer system to focus audio pickup from the region proximate to the audience member in response to receiving the indication. The method also includes displaying an enhanced image of the region proximate to the audience member using the computer system in response to receiving the indication.

It is an aim of the present disclosure to address these issues.

### SUMMARY

According to a first aspect of the disclosure, an image capture control device according to claim 1 is provided.

Other features of the disclosure are defined in the appended claim.

According to aspects of the present disclosure, adaptable image capture control can be provided, capable of manging image capture in a large and complex image capture environment. Furthermore, according to aspects of the disclosure, both the efficiency and operability of image capture control systems and image capture devices are improved. Of course, the present disclosure is not particularly limited to these advantageous technical effects. There may be other as would become apparent to the skilled person when reading the disclosure.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 illustrates an apparatus in accordance with embodiments of the disclosure;
Figure 2 illustrates an image of an imaging environment in a first example situation;
Figure 3 illustrates an example network in accordance with embodiments of the disclosure;
Figure 4 illustrates an image capture control system in accordance with embodiments of the disclosure;
Figure 5 illustrates an example imaging environment in accordance with embodiments of the disclosure;
Figure 6 illustrates example image processing in accordance with embodiments of the disclosure;
Figure 7 illustrates example image processing in accordance with embodiments of the disclosure;
Figure 8 illustrates an example image capture timeline in accordance with embodiments of the disclosure;
Figure 9 illustrates a method of image capture control in accordance with embodiments of the disclosure.

### DESCRIPTION OF THE EMBODIMENTS

Referring now to the drawings, wherein like reference numerals designate identical or corresponding parts throughout the several views.

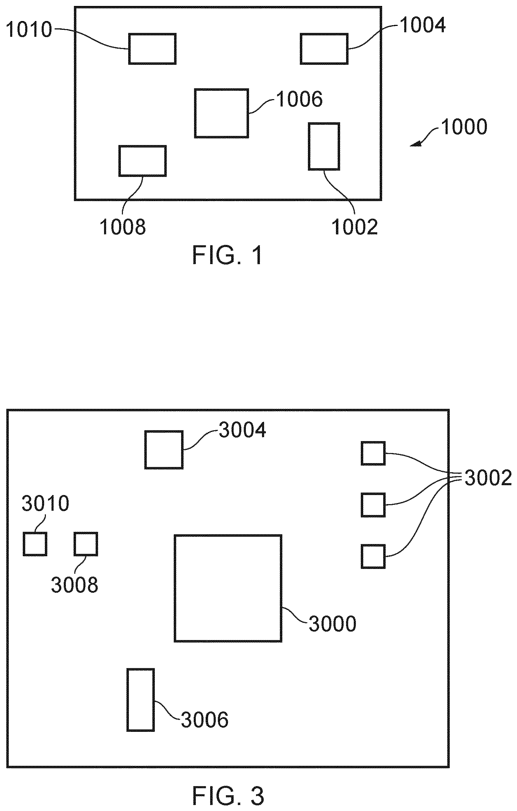

Referring to Figure 1, an apparatus 1000 according to embodiments of the disclosure is shown. Typically, an apparatus 1000 according to embodiments of the disclosure is a computer device such as a personal computer or a terminal connected to a server. Indeed, in embodiments, the apparatus may also be a server. The apparatus 1000 is controlled using a microprocessor or other processing circuitry 1006. In some examples, the apparatus 1000 may be a portable computing device such as a mobile phone, laptop computer or tablet computing device.

The processing circuitry 1006 may be a microprocessor carrying out computer instructions or may be an Application Specific Integrated Circuit. The computer instructions are stored on storage medium 1008 which maybe a magnetically readable medium, optically readable medium or solid state type circuitry. The storage medium 1008 may be integrated into the apparatus 1000 or may be separate to the apparatus 1000 and connected thereto using either a wired or wireless connection. The computer instructions may be embodied as computer software that contains computer readable code which, when loaded onto the processor circuitry 1006, configures the processor circuitry 1006 to perform a method according to embodiments of the disclosure.

Additionally, an optional user input device 1004 is shown connected to the processing circuitry 1006. The user input device 1004 may be a touch screen or may be a mouse or stylist type input device. The user input device 1004 may also be a keyboard or any combination of these devices.

A network connection 1002 may optionally be coupled to the processor circuitry 1006. The network connection 1002 may be a connection to a Local Area Network or a Wide Area Network such as the Internet or a Virtual Private Network or the like. The network connection 1002 may be connected to a server allowing the processor circuitry 1006 to communicate with another apparatus in order to obtain or provide relevant data. The network connection 1006 may be behind a firewall or some other form of network security.

Additionally, shown coupled to the processing circuitry 1006, is a display device 1010. The display device 1010, although shown integrated into the apparatus 1000, may additionally be separate to the apparatus 1000 and may be a monitor or some kind of device allowing the user to visualize the operation of the system. In addition, the display device 1010 may be a printer, projector or some other device allowing relevant information generated by the apparatus 1000 to be viewed by the user or by a third party.

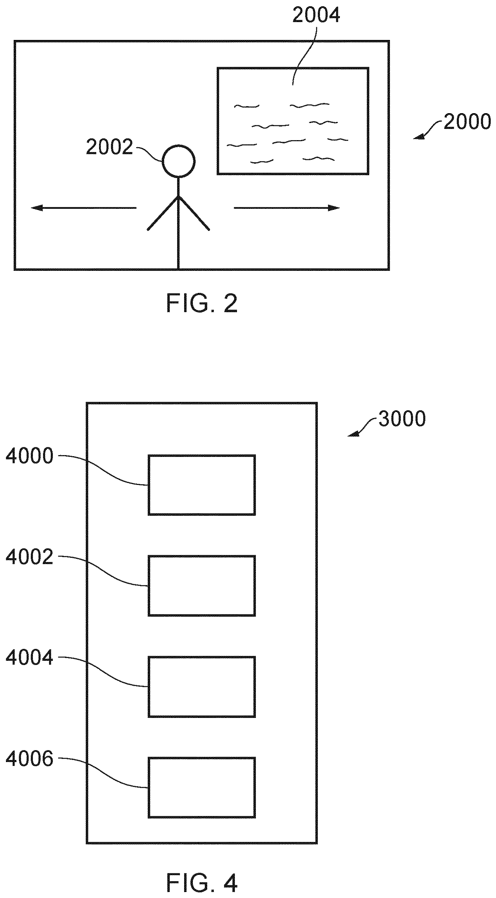

Figure 2 illustrates an image of an imaging environment in a first example situation.

In this example situation, an image capture device (not shown) is configured to capture an image of an image capture environment (or scene). That is, an image capture device is located within the image capture environment and is capturing images of that environment. An example image 2000 captured by the image capture device is illustrated in Figure 2. It will be appreciated that the image capture device may be configured to capture a single image 2000 of the image capture environment. Alternatively, the image capture device may be configured to capture a series of images of the image capture environment, which may, optionally, form a video of the image capture environment.

The type of the image capture device (not shown) is not particularly limited, and may be any type of image capture device. The image capture device may, for example, be a still image camera or a video image camera, incorporating CCD or CMOS sensors. The image capture device may be capable of capturing images in a range of different image resolutions including standard, high definition, 4K and/or 8K images for example.

The images captured by the image capture device may be transmitted via a wired or wireless connection (such as a Wi-Fi or Bluetooth connection or the like) for subsequent display on a compatible image display device. Alternatively or in addition, the image or images captured by the image capture device may be transmitted to storage for later retrieval.

The example image 2000 illustrated in Figure 2 of the present disclosure comprises a user 2002 and an object 2004. User 2002 may fixed an initial configuration of the image capture device such that the image capture device captures images both of themselves (the user 2002) and of the object 2004. In this example, user 2002 may be performing an educational multimedia presentation. In this example, user 2002 wishes the images of the presentation to be recorded in storage and/or transmitted to the electronic devices of other users such that those other users can remotely watch the presentation.

Having configured the image capture device to capture images of themselves and the object 2004, user 2002 may experience difficulty if they desire to move within the image capture environment. That is, the image capture device (not shown) has a fixed initial configuration (established by user 2002) and will be unable to capture images of user 2002 if they move outside the field of vision of the image capture device. This limits the range of motion of user 2002. Moreover, an attempt by user 2002 to reconfigure the camera during the presentation will disrupt the presentation and cause significant frustration for both user 2002 and the other users remotely watching the images of the presentation.

In this example, object 2004 may be an object such as a white board or the like upon which user 2002 can write information during the presentation. For example, during the presentation, user 2002 may wish to draw certain illustrations on the white board in order to aid the explanation of a topic. Alternatively, user 2002 may wish to write key facts or information on the white board to emphasise a key point for understanding. Therefore, user 2002 may desire that the information on the white board is clearly visible in the image data captured by the image capture device (not shown).

If the user 2002 attempts to reconfigure the image capture device during the presentation (e.g. in order to follow the movement of the user 2002 around the image capture environment), the visibility of the information provided on the white board may be affected. This would be disruptive and may cause significant frustration for both user 2002 and the other users watching the images of the presentation.

Accordingly, it can be difficult for a user, such as user 2002, to operate and control the image capture device while performing other tasks (such as giving a multimedia presentation).

In order to enhance the images obtained by the image capture device, the user 2002 may have pre-configured the image capture device to perform certain processing steps (such as image processing) on the images captured by the image capture device. For example, user 2002 may have pre-configured the image capture device, or processing circuitry attached to the image capture device, to perform certain processing to enhance the readability within the image data of information written on object 2004 during the presentation. That is, user 2002 may have pre-configured the image capture device, or processing circuitry attached to the image capture device, to perform certain image processing on the image data, such as handwriting recognition/extraction processing or the like. However, since user 2002 must pre-configure the image capture device to perform such processing, the image capture device will attempt to perform such image processing even if/ the object 2004 is itself not visible within the captured image data. Given the computationally complexity of such processing, it is inefficient to perform this processing continually during the presentation (e.g. in a situation where the object 2004 is no longer visible).

Therefore, as previously described, there is a desire for an image capture control system which can address these issues. Accordingly, an image capture control system, method and computer program product are provided in accordance with embodiments of the disclosure.

### <Image Capture Control System>

Referring now to Figure 3 of the present disclosure, an example network in accordance with embodiments of the disclosure is illustrated. An image capture control system 3000 is included within this example network. Image capture control system (or device) 3000 is configured to control an image capture device during the capturing of images of an imaging environment, and is provided in order to address the issues of a system such as that described with reference to Figure 2 of the present disclosure. The image capture control system 3000 will be described in more detail with reference to Figure 4 of the present disclosure.

The network illustrated further comprises a first plurality of image capture devices 3002. The first plurality of image capture device 3002 may be any form of digital image capture device capable of capturing still or moving image data of the imaging environment. Each of the first plurality of image capture devices 3002 may be configured in order to capture images of a certain region of the imaging environment. Image capture control system 3000 may be communicatively coupled to each of the first plurality of image capture devices 3002 by any suitable wired or wireless connection.

The network illustrated in Figure 3 of the present disclosure further comprises a second image capture device 3004. Image capture device 3004 may be a digital image capture device capable of capturing still of moving image data of the imaging environment. Similar to the first plurality of image capture devices 3002, image capture device 3004 may be communicatively coupled to the image capture control system 3000. However, in contrast to the first plurality of image capture devices 3002, the image capture device 3004 may be configured such that it can capture images of the entire image capture environment. In some examples, image capture device 3004 may be a wide angle camera (or other form of image capture device) or the like, which is capable of covering the entire image capture environment. Alternatively, image capture device 3004 may be a camera (or other form of image capture device) which is capable of remote directional and zoom control. Specifically, image capture device 3004 may be capable of performing pan, tilt and zoom operations. This enables image capture device 3004 to obtain images of the entire image capture environment (one potion of the image environment at a time), under the control of image capture control system 3000.

The network illustrated in Figure 3 of the present disclosure further comprises a storage unit 3006. Storage unit 3006 may also be communicatively coupled with the image capture control system 3000. Additionally, the storage unit 3006 may be communicatively coupled to either the first plurality of image capture devices 3002 and/or image capture device 3004. Storage unit 3006 may be configured to store data, such as image capture data, captured by the image capture devices 3002 and/or 3004, in addition to data provided and/or processed by the image capture control system 3000. Storage unit 3006 may, in certain examples, be part of a server side device.

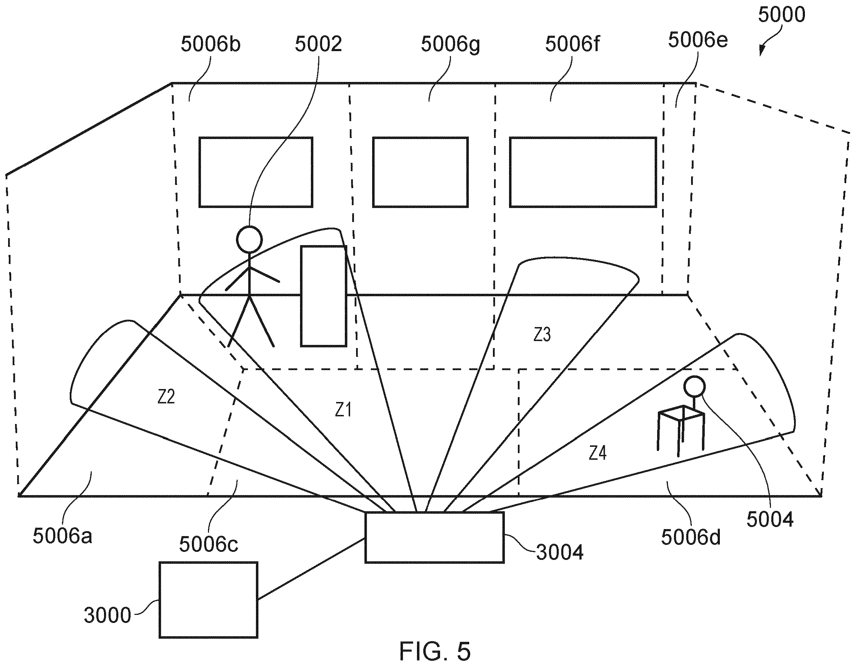

The network illustrated in Figure 3 of the present disclosure further includes interactive elements 3008 and 3010. These interactive elements 3008 and 3010 may also be communicatively coupled to the image capture control system 3000. In some examples, interactive element 3008 may be a first type of interactive element (e.g. a proximity sensor) while interactive element 3010 may be a second type of interactive element (e.g. a button or switch). Interactive elements 3008 and 3010 provide the image capture control system 3000 with additional information regarding the image capture environment. Interactive elements 3008 and 3010 will be described in more detail with reference to Figure 5 of the present disclosure.

The image capture control system 3000 is, itself, illustrated in more detail in Figure 4 of the present disclosure. As illustrated in Figure 4, the image capture control system 3000 comprises a number of distinct units 4000 to 4006. However, it will be appreciated that in certain examples, these units may be provided as a single processing circuitry.

Specifically, image capture control system 3000 comprises a receiving unit 4000, an identification unit 4002, a controlling unit 4004, and a performance (or processing) unit 4006.

Receiving unit 4000 is configured to receive image data of an imaging environment from an image capture device. Identification unit 4002 is configured to identify a selection of a first imaging zone of a plurality of pre-configured imaging zones within the imaging environment as an active imaging zone. Controlling unit 4004 is configured to control the image capture device based on the identification of the active imaging zone to capture image data of the active imaging zone. Processing unit 4006 is configured to perform processing on the captured image data of the active imaging zone based on the active imaging zone which has been selected.

In other words, according to embodiments of the disclosure, an imaging environment may first be separated into a plurality of pre-configured imaging zones (these will be described in more detail with reference to Figure 5 of the disclosure). The image capture control system 3000 is then configured to capture images of an active imaging zone from amongst the plurality of pre-configured imaging zones, and perform certain processing on the captured image data in accordance with the selected imaging zones.

The image capture control system 3000 may therefore output, store or otherwise provide processed images of the active image zone from amongst the pre-configured imaging zones of the imaging environment during image capture.

In the example network of Figure 3, the receiving unit 4000 of image capture control system 3000 may receive from either the first plurality of image capture devices 3002 or, alternatively, image capture device 3004, image capture data of a first image capture zone within the image capture environment. Then, the identification unit 4002 of the image capture control system 3000 may identify that a user has selected an alternative zone within the image capture environment as the active imaging zone (e.g. the user has moved from the first image capture zone to the second image capture zone). Accordingly, the controlling unit 4004 of image capture control system 3000 may control the image capture device (being either the first plurality of image capture devices 3002 or, alternatively, the image capture device 3004) to capture image data of the newly selected active imaging zone. That is, the image capture control system 3000 may control image capture device 3004 such that it moves (e.g. through zoom, pan or tilt) to capture an image of the newly selected active imaging zone. Image data of this new imaging zone will then be received by the image capture control system 3000 from the image capture device.

Furthermore, the processing unit 4006 of the image capture control system 3000 will apply certain processing steps to the captured image data in accordance with the selected imaging zone. If, for example, the user has moved into an image capture zone where an object 2004 (such as a whiteboard) is located, then the image capture control system 3000 may apply processing such as handwriting extraction processing to the image data. In an image capture environment without an object such as object 2004, the handwriting extraction processing will not be performed by the processing unit 4006 of the image capture control system 3000.

In this manner image capture control system 3000 will re-configure the image capture devices in accordance with the active imaging zone selected by the user. Furthermore, image processing appropriate to the image capture environment in which the user is located will be performed by the image capture control system 3000. These features improve the operability and efficiency of the image capture control system 3000. That is, according to embodiments of the disclosure, the image capture control system 3000 will identify the appropriate image capture settings (corresponding to the active image capture zone) for an imaging environment and subsequently control the image capture device to capture image data accordingly. In this manner, efficiency and operability of image capture control system 3000 and image capture devices are improved.

### <Example Situation>

Figure 5 illustrates an example imaging environment in accordance with embodiments of the disclosure. The example image control system illustrated in Figures 3 and 4 of the present disclosure may be applied to an example imaging environment such as that illustrated with reference to Figure 5 of the present disclosure.

In this example imaging environment, a user 5002 is located within an imaging environment 5000. Furthermore, in this example, user 5002 is a presenter (such as a teacher, lecturer or the like) who is presenting certain information to an audience 5004. Imaging environment 5000 may be an enclosed space such as a hall or classroom for example.

Image capture device 3004 is provided within the image capture environment 5000 such that image data of the image capture environment can be obtained. Image capture device 3004 is connected to, and controlled by, image capture control system 3000. However, it will be appreciated that image capture control system 3000 need not, itself, be located within the image capture environment 5000.

### <Imaging Zones>

A number of pre-configured imaging zones 5006a, 5006b, 5006d and 5006f have been established within the imaging environment 5000. Each of these pre-configured imaging zones (or image capture zones) corresponds to a different region or area within the imaging environment. For example, image capture zone 5006b is an imaging zone which covers a region (e.g. a volume) of space surrounding a lectern from where the presenter presents certain content. In contrast, image capture zone 5006d covers a region of space where members of the audience 5004 sit during the presentation. In contrast, zones 5006c and 5006e are zones within the imaging environment which have not, in this example, been allocated as pre-configured imaging zones. These additional zones within the imaging environment may be allocated as imaging zones in certain examples. Furthermore, in this example, zone 5006g is a display zone, where the output from the image capture control system 3000 is displayed within the imaging environment. As such, in this example, zone 5006g has not been allocated as a pre-configured imaging zone.

In this example, the presenter 5002 may have configured the pre-configured image capture zones 5006a, 5006b, 5006d and 5006f before the start of the presentation. That is, presenter 5002 may have used an input device connected to the image capture control system 3000 in order to inform the image capture control system 3000 of the pre-configured imaging zones within the imaging environment. Furthermore, once the pre-configured imaging zones have been identified, one or more functions or uses may be attributed to each of the imaging zones. That is, imaging zone 5006d may be designated as an area within the imaging environment where members of the audience will be located. Certain functions (or processing requirements) may then be associated with this imaging zone 5006d. For example, image zone 5006d may be attributed as a 'Gesture Capture Zone' where gestures from the audience members are to be identified. Such gestures may, for example, include a member of the audience raising their hand for attention. As such, gesture recognition processing may be performed on image data of imaging zone 5006d. However, in this example, gesture recognition processing would not be performed on image capture data from image capture zone 5006a, for example.

Alternatively, a user other than the presenter 5002 may have established the pre-configured imaging zones (and their associated uses and/or functions) on behalf of the presenter 5002. In other examples, the pre-configured imaging zones (and their associated uses and/or functions) may be established based on a previously used configuration of imaging zones within the image capture environment (such as imaging zones which were used in a previous lecture). Alternatively, image capture zones (and their associated uses and/or functions) may be established by the image capture control system 3000 automatically (based upon a standard template or the like). Alternatively, the image capture zones (and their associated uses and/or functions) may be established by the image capture control system upon recognition of certain features within the image capture environment (e.g. a first image capture zone of predetermined size may be established around an object, such as the lectern, once that object has been identified within the image feed, and functions associated with this object may be associated with that imaging region).

In the example imaging environment of Figure 5, image capture zone 5006a may be designated as a "chroma keyless zone" (being a zone for which chroma key processing, or chroma keyless processing, should be performed (which is a type of image overlay processing)), image capture zones 5006b and 5006f may be designated as "handwriting extraction zones" (being a zone for which handwriting extraction processing should be performed) and image capture zone 5006d may be designated as a "gesture capture zone" (being a zone for which gesture recognition processing should be performed).

That is, in this example, a number of whiteboards are located within the imaging environment 5000 (one each in image capture zones 5006b and 5006frespectively). Image capture control system 3000 may therefore perform image processing such as handwriting extraction processing in these image capture zones.

Accordingly, processing appropriate to each image capture zone (imaging zone) may be applied by the image capture control system 3000.

An image feed of the imaging environment, comprising images of the active image zone which are processed and output by image capture control system 3000, may be displayed on a display within the image capture environment (e.g. within display zone 5006g). This enables the presenter to enhance and augment their presentation with processing applied by image capture control system 3000 during the presentation.

Furthermore, the image feed of the imaging environment, comprising images of the active image zone which are processed and output by image capture control system 3000, may be transmitted to remote audience members or participants who are watching the presentation via a portable electronic device. Alternatively, or in addition, the image feed of the imaging environment from image capture control system 3000 may be stored in a storage unit (such as storage unit 3006) whereby the recording of the presentation can be retrieved and viewed at a later date.

### <Example Processing>

The processing applied by the image capture control system 3000 will vary depending upon the particular object present within the environment and the requirements of the user (e.g. the presenter 5002). However, in the example of Figure 5 of the present disclosure, the processing may include handwriting extraction zones and chroma-key zones.

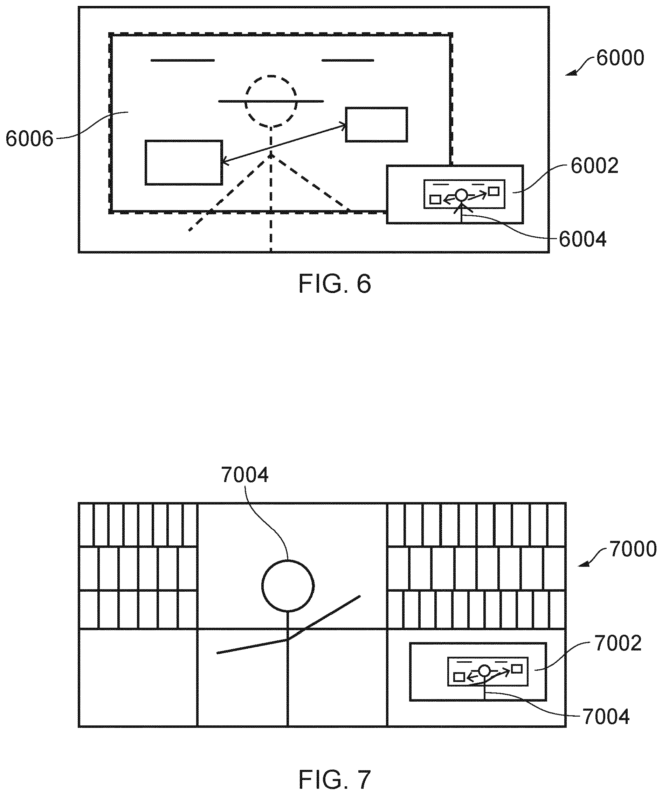

An example of handwriting extraction processing which may be performed within these regions is illustrated in Figure 6 of the present disclosure. In this example, an image capture zone 6002 is illustrated with a presenter 6004. The information which has been written on the whiteboard by presenter 6004 is partially blocked by the presenter standing in front of the whiteboard. Accordingly, upon recognition of the image capture zone as being a "handwriting extraction zone" image capture control system 3000 may perform processing such as handwriting extraction processing on the image data of the image capture zone.

An example of image data 6000 as processed by image capture control system 3000 is also illustrated in Figure 6. Here, the information written on the board by the presenter is identified by the image capture control system 3000, extracted and overlaid upon the image data from the image capture device. Image capture control system may combine image data from a number of different image capture devices within the imaging environment in order to perform this function (each being controlled to obtain a different image of the image capture zone (e.g. at a different angle, orientation or elevation). In this manner, the information written by the presenter on the white board can be clearly identified in the image data of the image capture zone produced by image capture control system 3000. The image data 6000 as processed by the image capture control system 3000 may be displayed upon a display device within the imaging environment (not shown) such that members of the audience within the imaging environment may see the image data as processed by the image capture control system 3000 (e.g. with the handwriting extracted).

An example of processing which may be performed in a "chroma-keyless zone" is illustrated with reference to Figure 7 of the present disclosure. The image data 7002 received from an image capture device for this image capture zone is illustrated. Presenter 7004 can be seen, in this image data 7002, as being stood in front of an object in the image capture environment. However, this image capture zone has been designated as a "chroma-keyless zone". That is, in this example, image capture control system performs chroma key processing, or chroma keyless processing, on the image data of this image capture zone in order to extract the presenter 7004 from the image data and overlay the presenter 7004 on an alternative computer generated background image.

An example of image data 7000 as processed by image capture control system 3000 is also illustrated in Figure 7. Here presenter 7004 is overlaid, in the image data 7000 as processed by the image capture control system 3000, in front of a computer generated background which is not, itself, present within the image capture environment. In examples, this may be any computer generated background which has been selected by the presenter 7004. This may be particularly advantageous whereby the presenter 7004 wishes to demonstrate certain information in front of the computer generated overlay. The image data 7000 as processed by the image capture control system 3000 may be displayed upon a display device within the imaging environment (not shown) such that members of the audience within the imaging environment may see the image data as processed (e.g. with the presenter 7004 overlaid upon a computer generated background image).

It will be appreciated that the processing performed by the image capture control system 3000 in a "handwriting extraction zone" or a "chroma-keyless zone" is not specifically limited to the above described example. In fact, any suitable processing may be performed by image processing system 3000 on the image data from the image capture devices as required. That is, the actual processing which is performed on the image capture zones will depend upon the situation to which the embodiments of the disclosure are applied. However, advantageously, according to embodiments of the disclosure the specific processing which has been attributed to each of the image capture zones within the image capture environment is performed by the image capture control system 3000 only on the image data received from that image capture zone and only when that image capture zone is identified as the active image capture zone within the image capture environment.

In certain embodiments, the performance of the processing by the image capture control system 3000 in a certain image capture environment may be dependent upon the launching of an application to perform that processing (e.g. an application to perform "handwriting extraction"). In this situation, the image capture control circuitry may launch the application for each image capture zone 3000 only when that zone becomes the active image capture zone within the image capture environment. Launching the processing application associated with an image capture zone only when that image capture zone becomes the active image capture zone within the image capture environment improves the utilization efficiency of resources of the image capture control system 3000.

### <Active Imaging Zone>

Returning to the example of Figure 5 of the present disclosure, a selection of an image capture zone as the active image capture zone within the image capture environment will be described.

As illustrated within Figure 5 of the present disclosure, presenter 5002 is, initially, located adjacent to the lectern within image capture zone 5006b of the image capture environment. Therefore, initially, image capture control system 3000 controls image capture device 3004 to capture images of this image capture zone. The field of view z1 of the image data captured by image capture control device 3004 of this first image capture zone 5006b is shown. As this image capture zone has been designated as a "handwriting extraction zone" the image capture control system 3000 will perform handwriting extraction processing on the image data received from the image capture device 3004.

During the presentation, presenter 5002 may move to image capture zone 5006f. The presenter 5002 may move to image capture zone 5006f in order to write information on the whiteboard located within that image capture zone. As the presenter 5002 moves across the image capture environment, image capture control system 3000 will identify that a change in the active image capture zone has occurred. That is, as the lecturer moves into image capture zone 5006f, image capture zone 5006f will become the active image capture zone. Accordingly, image capture control system 3000 will control the image capture device 3004 to capture images of image capture zone 5006f. The field of view of image capture device 3004 when image capture zone 5006f is the active image zone is illustrated as field of view Z3. As image capture zone 5006f has been designated with the same use/purpose as image capture zone 5006b (e.g. a secondary handwriting extraction zone) image capture control system 3000 will continue to perform handwriting extraction processing on the image data captured by image capture device 3004.

Presenter 5002 may then move from image capture zone 5006f to image capture zone 5006a within the image capture environment. Image capture control system 3000 may then identify the change of location and make image capture zone 5006a the active image capture zone within the image capture environment. Accordingly, image capture control system 3000 may control image capture device 3004 to capture images of the image capture zone 5006a. The field of view of image capture device 3004 when it obtains images of image capture zone 5006a is illustrated as field of view Z2. However, image capture zone 5006a has been designated as a "chroma-keyless zone". Therefore, image capture control system ceases performance of handwriting extraction processing on the image data captured by image capture device 3004 (as was performed in the previous active image capture zone 5006f). Rather, the image capture control system performs chroma-key processing, or chroma keyless processing, on the image data captured by image capture device 3004 while image capture zone 5006a is the active image zone within the imaging environment.

Thus, image capture control system 3000 controls the image capture device 3004 in accordance with the active image zone within the imaging environment. Furthermore, image capture control system 3000 performs processing on the image data captured by image capture device 3004 in accordance with the active imaging zone within the imaging environment.

### <Selection of Active Imaging Zone>

The image capture control system 3000 is configured to identify when a change in the active image zone within the imaging environment has occurred. In the example described with reference to Figure 5 of the disclosure, the image capture control system 3000 identifies a change in the active image zone when the presenter 5002 moves from a first pre-configured image capture zone to a second pre-configured image capture zone within the image capture environment. However, the present disclosure is not particularly limited in this regard. That is, there are a number of advantageous mechanisms by which an active imaging zone of the image environment may be selected and/or identified by the image capture control system 3000.

According to certain embodiments of the disclosure, the image capture control system 3000 may be configured to identify a selection of the active imaging zone based on an analysis of the received image data. That is, image capture control system 3000 may analyse the image data which is received from the image capture devices and identify, from this image data, the active imaging zone within the imaging environment. For example, in the situation whereby a presenter (such as presenter 5002) moves from one image capture zone to another, the image capture control system may identify the motion of the presenter within the image data and change the active image zone in accordance with this movement. Alternatively, when a first plurality of image capture devices are provided (each covering a certain portion of the image capture environment) the image capture control system may identify that the location of an object (such as the presenter) within the image capture environment has moved to a location corresponding to an imaging zone different from the current active imaging zone. The active image zone may thus be changed to correspond to the new location of the object within the scene on the basis of the received image data.

Alternatively, the image capture control system may identify the active imaging zone based on an identification of a visual marker within the imaging environment. That is, the active imaging zone need not always be based on the region where the presenter is located. For example, the presenter may be located in a first imaging zone (currently the active imaging zone) of the image capture environment (e.g. image capture zone 5006b) but wish to refer to information which has been written on an object contained within a second image capture zone (e.g. image capture zone 5006f). In this situation, the presenter may point towards the second image capture zone (with either their arm or a pointing object (such as a laser pointer or the like)). On identification of the visual marker within the image data (e.g. the presenter pointer towards the second image capture zone) the image capture control device 3000 may identify a change and designate the second image capture zone 5006f as the active image zone. The image data processed and output by image capture control system 3000 will then be image data of the second image capture zone (5006f). In this manner, the active image zone may be changed based on the received image data.

Of course, the visual markers used to identify a change in the active imaging zone are not particularly limited in this regard. Alternatively, for example, the identification of a certain gesture by a member of the audience in image capture zone 5006d may cause the image capture zone 5006d to become the active image capture zone. A person watching the presentation remotely would then receive an image of image capture zone 5006d while the member of the audience asked their question, enabling the remote viewer of the presentation to observe the relevant portion of the imaging environment for that stage of the presentation.

These mechanisms for identifying a selection of the active imaging zone based on the received image data are particularly advantageous as they further improve the operability of the image capture control system 3000.

Alternatively or in addition, according to certain embodiments of the disclosure, the image capture control system 3000 may be configured to receive data from a zone selection device and base the selection of the active imaging zone on the data received from the zone selection device. The presence of a zone selection device within the image capture environment may further improve the ability of the image capture control system 3000 to dynamically change to the active image zone in accordance with changes which occur within the imaging environment. In fact, in certain examples, the zone selection device comprises one or more interactive elements (e.g. interactive elements 3008 and 3010) located within the imaging environment. These interactive elements may be activated by participants within the imaging environment (e.g. the presenter 5002 or audience members 5004) in order to indicate (either actively or passively) a change in the active imaging environment.

It will be appreciated that the number and location of the interactive elements within the imaging environment is not particularly limited and may vary in accordance with the physical dimensions of the imaging environment and the number of pre-configured imaging zones.

**In** certain examples, the one or more interactive elements may comprise a wired and/or wireless switch for activation by a user within the imaging environment. For example, the presenter 5002 may have a remote device/control unit comprising a wireless switch which they can activate in order to indicate a change in the active imaging zone to the image capture control system 3000. In certain examples, the control unit may comprise a remote device with a number of buttons, each button corresponding to an imaging zone within the imaging environment. Then, in this example, if the presenter wishes to change the active imaging zone to a different portion of the imaging environment, the presenter may press the button corresponding to that imaging zone on the remote device. The image capture control system 3000 may then identify the active imaging zone based on the activation of the button (or other type of wired and/or wireless switch) and control the image capture device 3004 (and the processing applied to the image data received from the image capture device 3004) accordingly.

Use of a wired/wireless switch for activation by a user within the imaging environment may be considered an example of use an active interactive element to indicate a change in the active image capture zone.

In certain examples, the one or more interactive elements may comprise proximity sensors for identification of a location of a user within the imaging environment. For example, proximity sensors (such as ultrasonic proximity sensors or the like) may be located within one or more of the image capture zones in the image capture environment. Then, as a user, such as the presenter, moves around the image capture environment, the image capture control system 3000 may identify an image capture zone as the active image capture zone within the imaging environment in accordance with the information received from the proximity sensor. For example, when presenter 5002 moves within certain range of a proximity sensor located within image capture zone 5006a, that image capture zone 5006amay be identified as the active image capture zone within the image capture environment.

In certain examples, the one or more interactive elements may comprise one or more pressure sensors for identification of a location of a user within the imaging environment. That is, pressure sensors (such as a pressure mat or the like) may be placed at certain locations within the image capture environment. Then, as the presenter moves around the image capture environment they will, periodically, activate one or more of those pressure sensors. Moving from image capture zone 5006b to image capture zone 5006f may cause an activation of a pressure sensor in image capture zone 5006f (and, conversely, a deactivation of a pressure sensor within image capture zone 5006b). The change of active image capture zone within the image capture environment may be based upon this activation.

The proximity sensors and/or the pressure sensors may be considered to be examples of use of passive interactive elements to indicate a change in the active image capture zone to the image capture control system 3000.

These above described mechanisms for identifying a change in the active imaging zone are particularly advantageous as they further improve the ability of the image capture control system 3000 to identify the active image zone within an imaging environment and further improve the operability of the image capture control system 3000.

### <Audio>

In embodiments of the disclosure, audio from audio capture devices may be received and processed by image capture control system 3000 in addition to image capture control system 3000 receiving and processing of image data from the image capture environment. That is, in certain examples, one or more audio capture devices (such as a microphone or the like) may be located throughout the image capture environment. These audio capture devices may be connected to the image capture control system 3000 and thus provide image capture control system 3000 with certain audio data from within the image capture control environment.

As such, in embodiments of the disclosure, the image capture control system 3000 may further be configured to receive audio data from one or more audio capture devices within the imaging environment.

The number and location of audio capture devices within the imaging environment are not particularly limited and may vary in accordance with embodiments of the disclosure. In some examples, a single audio capture device may be provided which records audio from the entire image capture environment. In other situations, a plurality of audio capture devices may be provided throughout the image capture environment. Each of the plurality of audio capture devices would capture audio signals of varying strength depending on the proximity of the audio capture device to the source of the sound. In fact, a plurality of zoned beamforming microphones may be used in accordance with embodiments of the disclosure. In this situation, image capture control system 3000 may be configured to enhance sound originating from within the active image capture zone (corresponding, for example, to the sound from the presenter 5002) while further being configured to reduce or filter sound originating from image capture zones other than the active image capture zone (corresponding, for example, to sound from the audience 5004 during the presentation). Processing the audio data received from the audio capture devices in this manner enables the image capture device to further enhance the recording from within the image capture environment. In other words, the image capture device may be configured to modulate the audio data received from the audio capture devices in accordance with the active image zone. This ensures that sounds originating from the active image zone are enhanced.

In certain examples, one or more audio devices located within the image capture environment may further be used as the one or more interactive elements used, by image capture control system 3000, to identify the active image zone within the imaging environment. For example, image capture control system 3000 may be configured to identify the active image zone within the image capture environment based on the location (or other property, such as intensity or the like) of sound within the audio capture environment. That is, in certain examples, the active image zone may be selected as the image zone from which the loudest sound is identified. In the example of Figure 5 of the present disclosure, the loudest sound will correspond to the location of the presenter 5002 as they present the information.

Alternatively, image capture control system 3000 may be configured to analyse the audio data from the one or more audio capture devices in order to identify an audio cue (such as a key word or the like) within the audio data indicative of a change in the active imaging zone. For example, a predefined audio cue may be a verbal instruction such as, "Change to Zone 1". Then, if the presenter 5002 says, "Change to Zone 1", the image capture control system 3000 will identify that the audio cue has been spoken and will change the active image zone to the corresponding image control zone.

In this manner, the identification of the active image zone within the imaging environment may be based upon an analysis of the audio data received from the audio capture devices. This further improves the operability of the image capture control system 3000.

### <Storage>

As described with reference to Figure 5 of the present disclosure, the image capture control system 3000 according to embodiments of the disclosure may receive image data from a number of image capture devices from around the image capture environment. Image capture control system 3000 may then perform certain image processing on the received image data corresponding to the active image zone within the imaging environment (such as overlaying the presenter 5002 on a computer generated background). Moreover, image capture control system 3000 may receive audio data from one or more audio capture devices, the audio data corresponding to sounds which have been recorded from within the image capture environment.

In certain examples, the processed image data from the active image zone and the processed audio data from the active image zone may be streamed directly to one or more electronic devices such that remote users may watch the presentation from the presenter in substantially real time (e.g. as the presentation is occurring). However, in other examples, it may be desired that the data from the imaging environment is first recorded in a storage unit (such as storage unit 3006) such that it can be accessed at a later time (e.g. when a person wishes to view a previous presentation which has occurred).

Furthermore, it may be desired that audio/image data from image zones other than the active image zone are recorded such that the presenter can edit the recorded presentation which has been recorded (choosing to focus at a given instant of time on image data from an image zone which was not identified by image capture device 3000 as the active image zone during the presentation).

As such, in accordance with embodiments of the disclosure, image capture control system 3000 may be configured to time stamp the received image data, the received audio data and a result of the processing performed on the capture image data, and further configured to store the time stamped data in a storage (e.g. storage unit 3006).

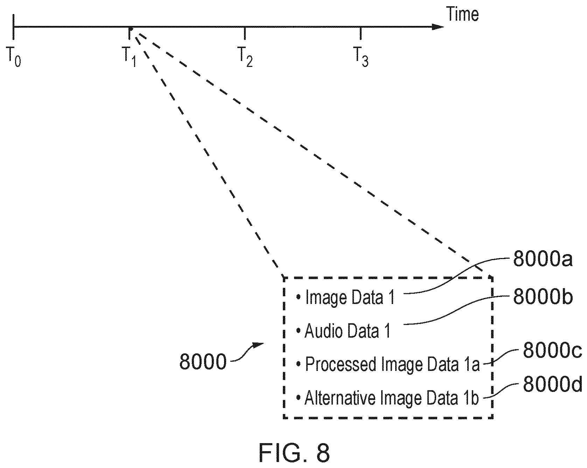

Figure 8 illustrates an example image capture timeline in accordance with embodiments of the disclosure. In this example, a timeline T is shown, with time steps T0, T1, T2 and T3. Each of time steps T0 to T3 illustrate a time at which image data and/or audio data of the image capture environment was received by image capture control system 3000. When the data from the imaging environment is received (being either image data and/or audio data) the image capture control system 3000 is configured to time stamp the data as data being received at time T. That is, the data received at time T1 is time stamped as being received at time T1. This data is then stored in the storage unit 3006 in a storage area 8000 (being, for example, a region of memory) associated with that time step T1.

That is, the image data 8000a of the active image zone (e.g. image capture zone 5006a) at time T1 and the audio data 8000a from the active image zone at time T1 are stored in the storage area 8000.

In this example, at time T1the active image zone may correspond to an image zone whereby handwriting extraction processing is to be performed on the image data. Accordingly, image capture control system 3000 performs handwriting extraction processing on the image data and stores the processed image data 8000c in the storage area 8000.

Furthermore, image capture control system 3000 may receive image data from a second image capture device contemporaneously to the image data of the active image environment. This may be image data from a second image capture device of the first plurality of image capture devices 3002 for example. Referring to the example of Figure 5 of the present disclosure, this second image data may correspond to image data from image capture zone 5006f. This alternative image data 8000d may also be stored by image capture control system 3000 in the storage area 8000 (e.g. with time stamp T1).

Data received and processed at a subsequent time (e.g. time T2) will be stored in a storage area associated with that time.

Then, after the presentation has been completed, a number of different presentation products may be constructed from the data recorded by the image capture control system 3000 during the presentation.

In a first example, image and audio data from the active image zone for each of the time steps may be selected and provided as an image and audio file of the presentation. However, second example, the processed image data 8000c (e.g. with features such as handwriting extraction and/or computer generated overlays or the like) may be selected and provided as the image data for each time step in combination with the audio data of the active image zone as an image and audio file of the presentation. Furthermore, the image data from the active image zones may be chosen as the image data for a number of time steps, while the alternative image data (such as image data 8000d) may be chosen as the image data for a number of other time steps during the presentation. This image data may then be provided in association with the corresponding audio data from the active image zones as the image and audio file of the presentation. In this manner, the image data from a zone other than the active image zone may be combined with the audio data from the active image zone in the final image and audio file of the presentation. This may enable a presenter to choose to focus upon an object or feature (such as a white board in image capture zone 5006f) outside the active image zone at any given time.

Therefore, according to certain examples, the image capture control system is further configured to construct an output file, the output file comprising time stamped image and/or audio data from the imaging environment. This may be a final image and audio file of the presentation which can then be replayed on a portable electronic device. Additionally, the image capture control system may be further configured to insert time stamped auxiliary information into the output file at a location identified based on a comparison of the time stamps of the image and/or audio data with the time stamp of the auxiliary information. That is, a presenter may wish that presentation slides displayed during the presentation are included within the output file, such that as well as the image and/or audio data of the imaging environment, a user who replays the output file can also observe the presentation slides at the same time as watching the image and/or audio data.

The auxiliary information may be any additional information which the presenter wishes to include within the output file, such as presentation slides, additional commentary, additional audio/and or image data or the like. Accordingly, the presenter may indicate a temporal location in the presentation at which the presenter wishes the auxiliary information to be included, and the image capture control system will insert the auxiliary data into the output file at the corresponding time based on a comparison with the time stamps of the image and audio data.

It will be appreciated that once the received image and audio data, and the processed image and audio data, have been stored and time stamped in accordance with embodiments of the disclosure, the manner by which the data is combined into a final image and audio file of the presentation is not particularly limited. That is, once synchronised in the above manner, the user (such as a presenter 5002) can switch between the captured image streams (e.g. the different components of the content stored in the storage unit 3006) as desired.

### <Method>

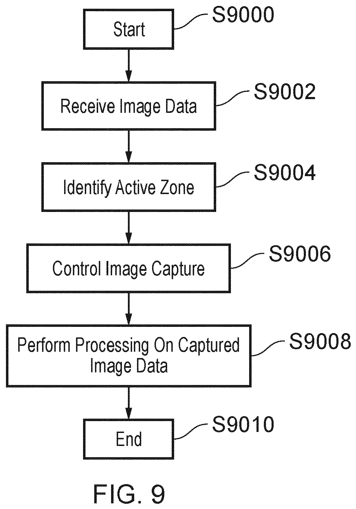

Figure 9 illustrates an image capture control method in accordance with embodiments of the disclosure. The method illustrated in Figure 9 may be performed by a system or apparatus such as that illustrated in Figures 1 and 3 of the present disclosure, for example.

The method begins at step S9000 and proceeds to step S9002.

In step S9002, the method comprises receiving image data of an imaging environment from an image capture device. The image data may be received, for example, from an image capture device such as image capture device 3004 described with reference to Figure 3 of the present disclosure.

Once the image data has been received, the method proceeds to step S9004.

In step S9004, the method comprises identifying a selection of a first imaging zone of a plurality of pre-configured imaging zones within the imaging environment as an active imaging zone.

Once the active imaging zone has been identified, the method proceeds to step S9006.

In step S9006, the method comprises controlling the image capture device based on the identification of the active imaging zone to capture image data of the active imaging zone.

Once the image data of the active imaging zone has been identified, the method proceeds to step S9008.

In step S9008, the method comprises performing processing on the captured image data of the active imaging zone based on the active imaging zone which has been selected. Optionally, performing processing on the captured image data may further comprises launching an application configured to perform processing on the captured image data of the active imaging zone based on the active imaging zone which has been selected.

Once the processing has been performed, the method proceeds to, and ends with, step S9010.

It will be appreciated that the image capture control method according to embodiments of the disclosure is not particularly limited to the steps, and the order of the steps, illustrated in Figure 9 of the present disclosure. That is, once the processing has been performed on the captured image data, the method may, instead of proceeding to step S9010, return to S9002 or S9004. Alternatively, subsequent image data (corresponding to a subsequent instance of time) may be received and temporarily stored (in a buffer or the like) while the processing of step S9008 is performed, for example.

Furthermore, while the present disclosure has been described with reference to image capture in the example image capture environment of Figures 2 and 5 of the present disclosure, it will be appreciated that the present disclosure is not particularly limited in this regard. That is, the image capture control system, method and computer program product of the present disclosure may be applied to other image capture environments as required. Aspects of the present disclosure are particularly advantageous in any such situation whereby a user traverses between a plurality of locations within the image capture environment.

Obviously, numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. Image capture control device (1000), the image capture control device comprising circuitry (1006) configured to:
receive image data (2000) of an imaging environment from an image capture device;
identify a selection of a first imaging zone of a plurality of pre-configured imaging zones within the imaging environment as an active imaging zone;
control the image capture device based on the identification of the active imaging zone to capture image data of the active imaging zone; and
perform processing on the captured image data of the active imaging zone,
**characterized in that**:
the processing performed on the captured image data is selected based on the active imaging zone which has been selected with specific processing being attributed to each imaging zone, wherein the identification of a selection of the active imaging zone is based on an analysis of the received image data.

2. The image capture control device according to Claim 1, wherein the analysis of the received image data comprises an identification of the location of an object within the imaging environment.

3. The image capture control device according to Claim 1 or 2, wherein the analysis of the received image data comprises an identification of a visual marker within the imaging environment.

4. The imaging capture control device according to Claim 1, wherein the image capture control system is configured to receive data from a zone selection device and wherein the identification of the active imaging zone is based on the data received from the zone selection device.

5. The image capture control device according to Claim 4, wherein the zone selection device comprises one or more interactive elements located within the imaging environment.

6. The image capture control device according to Claim 5, wherein the one or more interactive elements comprise one of i) a wired and/or wireless switch for activation by a user within the imaging environment and wherein the image capture control system is configured to identify the active imaging zone based on the activation or ii) proximity sensors for identification of a location of a user within the imaging environment and wherein the image capture control system is configured to identify the active imaging zone based on the location of the user or iii) pressure sensors for identification of a location of a user within the imaging environment and wherein the image capture control system is configured to identify the active imaging zone based on the location of the user.

7. The image capture control device according to Claim 1, wherein the image capture control system is further configured to receive audio data from one or more audio capture devices within the imaging environment.

8. The image capture control device according to Claim 7, wherein the identification of the active imaging zone is based on an analysis of the received audio data.

9. The image capture control device according to Claim 7, wherein the image capture control system is configured to i) modulate the received audio data based on the active imaging zone which has been selected or ii) time stamp the received image data, the received audio data and a result of the processing performed on the capture image data, and further configured to store the time stamped data in a storage.

10. The image capture control device according to Claim 9, wherein when the received image is time stamped, the image capture control system is further configured to construct an output file, the output file comprising time stamped image and/or audio data from the imaging environment, and insert time stamped auxiliary information into the output file at a location identified based on a comparison of the time stamps of the image and/or audio data with the time stamp of the auxiliary information.

11. The image capture control device according to Claim 1, wherein performing processing on the captured image data further comprises launching an application configured to perform processing on the captured image data of the active imaging zone based on the active imaging zone which has been selected.

12. The image capture control device according to Claim 1 or 11, wherein the processing performed on the captured image data comprises image analysis processing.

13. The image capture control device according to Claim 12, wherein the image analysis processing comprises at least one of handwriting extraction processing, image overlay processing and gesture recognition processing.

14. Image capture control method, the method comprising:
receiving image data (S9002) of an imaging environment from an image capture device;
identifying (S9004) a selection of a first imaging zone of a plurality of pre-configured imaging zones within the imaging environment as an active imaging zone;
controlling (S9006) the image capture device based on the identification of the active imaging zone to capture image data of the active imaging zone; and
performing processing (S9008) on the captured image data of the active imaging zone,
**characterized in that**:
the processing performed on the captured image data is selected based on the active imaging zone which has been selected with specific processing being attributed to each imaging zone, wherein the identification of a selection of the active imaging zone is based on an analysis of the received image data.

15. Computer program product comprising instructions which, when the program is executed by a computer, cause the computer to carry out an image capture control method, the image capture control method comprising:
receiving image data (S9002) of an imaging environment from an image capture device;
identifying (S9004) a selection of a first imaging zone of a plurality of pre-configured imaging zones within the imaging environment as an active imaging zone;
controlling (S9006) the image capture device based on the identification of the active imaging zone to capture image data of the active imaging zone; and
performing processing (S9008) on the captured image data of the active imaging zone,
**characterized in that**:
the processing performed on the captured image data is selected based on the active imaging zone which has been selected with specific processing being attributed to each imaging zone, wherein the identification of a selection of the active imaging zone is based on an analysis of the received image data.

## Patentansprüche

1. Bilderfassungssteuervorrichtung (1000), die Bilderfassungssteuervorrichtung umfassend eine Schaltung (1006), die konfiguriert ist um:
Bilddaten (2000) einer Bildgebungsumgebung von einer Bilderfassungsvorrichtung zu empfangen;
eine Auswahl einer ersten Bildgebungszone aus einer Vielzahl von vorkonfigurierten Bildgebungszonen innerhalb der Bildgebungsumgebung als eine aktive Bildgebungszone zu identifizieren;
die Bilderfassungsvorrichtung basierend auf der Identifikation der aktiven Bildgebungszone zu steuern, um Bilddaten der aktiven Bildgebungszone zu erfassen; und
eine Verarbeitung an den erfassten Bilddaten der aktiven Bildgebungszone durchzuführen, **dadurch gekennzeichnet, dass:**
die an den erfassten Bilddaten durchgeführte Verarbeitung basierend auf der aktiven Bildgebungszone, die ausgewählt wurde, ausgewählt wird, wobei jeder Bildgebungszone eine spezifische Verarbeitung zugeordnet ist, wobei die Identifikation einer Auswahl der aktiven Bildgebungszone auf einer Analyse der empfangenen Bilddaten basiert.

2. Bilderfassungssteuervorrichtung nach Anspruch 1, wobei die Analyse der empfangenen Bilddaten eine Identifikation des Ortes eines Objekts innerhalb der Bildgebungsumgebung umfasst.

3. Bilderfassungssteuervorrichtung nach Anspruch 1 oder 2, wobei die Analyse der empfangenen Bilddaten eine Identifikation einer visuellen Markierung innerhalb der Bildgebungsumgebung umfasst.

4. Bilderfassungssteuervorrichtung nach Anspruch 1, wobei das Bilderfassungssteuersystem konfiguriert ist, um Daten von einer Zonenauswahlvorrichtung zu empfangen, und wobei die Identifikation der aktiven Bildgebungszone auf den von der Zonenauswahlvorrichtung empfangenen Daten basiert.

5. Bilderfassungssteuervorrichtung nach Anspruch 4, wobei die Zonenauswahlvorrichtung ein oder mehrere interaktive Elemente umfasst, die innerhalb der Bildgebungsumgebung angeordnet sind.

6. Bilderfassungssteuervorrichtung nach Anspruch 5, wobei das eine oder die mehreren interaktiven Elemente eines umfassen von i) einem drahtgebundenen und/oder drahtlosen Schalter zur Betätigung durch einen Benutzer innerhalb der Bildgebungsumgebung, und wobei das Bilderfassungssteuersystem konfiguriert ist, um die aktive Bildgebungszone basierend auf der Betätigung zu identifizieren, oder ii) Näherungssensoren zur Identifikation eines Ortes eines Benutzers innerhalb der Bildgebungsumgebung, und wobei das Bilderfassungssteuersystem konfiguriert ist, um die aktive Bildgebungszone basierend auf dem Ort des Benutzers zu identifizieren, oder iii) Drucksensoren zur Identifikation eines Ortes eines Benutzers innerhalb der Bildgebungsumgebung, und wobei das Bilderfassungssteuersystem konfiguriert ist, um die aktive Bildgebungszone basierend auf dem Ort des Benutzers zu identifizieren.

7. Bilderfassungssteuervorrichtung nach Anspruch 1, wobei das Bilderfassungssteuersystem ferner konfiguriert ist, um Audiodaten von einer oder mehreren Audioerfassungsvorrichtungen innerhalb der Bildgebungsumgebung zu empfangen.

8. Bilderfassungssteuervorrichtung nach Anspruch 7, wobei die Identifikation der aktiven Bildgebungszone auf einer Analyse der empfangenen Audiodaten basiert.

9. Bilderfassungssteuervorrichtung nach Anspruch 7, wobei das Bilderfassungssteuersystem konfiguriert ist, um i) die empfangenen Audiodaten basierend auf der aktiven Bildgebungszone, die ausgewählt wurde, zu modulieren, oder ii) die empfangenen Bilddaten, die empfangenen Audiodaten und ein Ergebnis der an den erfassten Bilddaten durchgeführten Verarbeitung mit einem Zeitstempel zu versehen, und ferner konfiguriert ist, um die mit einem Zeitstempel versehenen Daten in einem Speicher zu speichern.

10. Bilderfassungssteuervorrichtung nach Anspruch 9, wobei, wenn das empfangene Bild mit einem Zeitstempel versehen ist, das Bilderfassungssteuersystem ferner konfiguriert ist, um eine Ausgabedatei zu erstellen, wobei die Ausgabedatei mit einem Zeitstempel versehene Bild- und/oder Audiodaten aus der Bildgebungsumgebung umfasst, und mit einem Zeitstempel versehene Zusatzinformationen in die Ausgabedatei an einem Ort einzufügen, der basierend auf einem Vergleich der Zeitstempel der Bild- und/oder Audiodaten mit dem Zeitstempel der Zusatzinformationen identifiziert wird.

11. Bilderfassungssteuervorrichtung nach Anspruch 1, wobei das Durchführen einer Verarbeitung an den erfassten Bilddaten ferner das Starten einer Anwendung umfasst, die konfiguriert ist, um eine Verarbeitung an den erfassten Bilddaten der aktiven Bildgebungszone basierend auf der aktiven Bildgebungszone, die ausgewählt wurde, durchzuführen.

12. Bilderfassungssteuervorrichtung nach Anspruch 1 oder 11, wobei die an den erfassten Bilddaten durchgeführte Verarbeitung eine Bildanalyseverarbeitung umfasst.

13. Bilderfassungssteuervorrichtung nach Anspruch 12, wobei die Bildanalyseverarbeitung mindestens eine von einer Handschriftextraktionsverarbeitung, einer Bildüberlagerungsverarbeitung und einer Gestenerkennungsverarbeitung umfasst.

14. Bilderfassungssteuerverfahren, das Verfahren umfassend:
Empfangen von Bilddaten (S9002) einer Bildgebungsumgebung von einer Bilderfassungsvorrichtung;
Identifizieren (S9004) einer Auswahl einer ersten Bildgebungszone aus einer Vielzahl von vorkonfigurierten Bildgebungszonen innerhalb der Bildgebungsumgebung als eine aktive Bildgebungszone;
Steuern (S9006) der Bilderfassungsvorrichtung basierend auf der Identifikation der aktiven Bildgebungszone, um Bilddaten der aktiven Bildgebungszone zu erfassen; und
Durchführen einer Verarbeitung (S9008) an den erfassten Bilddaten der aktiven Bildgebungszone, **dadurch gekennzeichnet, dass:**
die an den erfassten Bilddaten durchgeführte Verarbeitung basierend auf der aktiven Bildgebungszone, die ausgewählt wurde, ausgewählt wird, wobei jeder Bildgebungszone eine spezifische Verarbeitung zugeordnet ist, wobei die Identifikation einer Auswahl der aktiven Bildgebungszone auf einer Analyse der empfangenen Bilddaten basiert.

15. Computerprogrammprodukt, umfassend Anweisungen, die, wenn das Programm durch einen Computer ausgeführt wird, den Computer veranlassen, ein Bilderfassungssteuerverfahren vorzunehmen, das Verfahren umfassend:
Empfangen von Bilddaten (S9002) einer Bildgebungsumgebung von einer Bilderfassungsvorrichtung;
Identifizieren (S9004) einer Auswahl einer ersten Bildgebungszone aus einer Vielzahl von vorkonfigurierten Bildgebungszonen innerhalb der Bildgebungsumgebung als eine aktive Bildgebungszone;
Steuern (S9006) der Bilderfassungsvorrichtung basierend auf der Identifikation der aktiven Bildgebungszone, um Bilddaten der aktiven Bildgebungszone zu erfassen; und
Durchführen einer Verarbeitung (S9008) an den erfassten Bilddaten der aktiven Bildgebungszone, **dadurch gekennzeichnet, dass:**
die an den erfassten Bilddaten durchgeführte Verarbeitung basierend auf der aktiven Bildgebungszone, die ausgewählt wurde, ausgewählt wird, wobei jeder Bildgebungszone eine spezifische Verarbeitung zugeordnet ist, wobei die Identifikation einer Auswahl der aktiven Bildgebungszone auf einer Analyse der empfangenen Bilddaten basiert.

## Revendications

1. Dispositif de commande de capture d'image (1000), le dispositif de commande de capture d'image comprenant un système de circuits (1006) configuré pour :
recevoir des données d'image (2000) d'un environnement d'imagerie en provenance d'un dispositif de capture d'image ;
identifier une sélection d'une première zone d'imagerie d'une pluralité de zones d'imagerie préconfigurées au sein de l'environnement d'imagerie en tant que zone d'imagerie active ;
commander le dispositif de capture d'image en fonction de l'identification de la zone d'imagerie active pour capturer des données d'image de la zone d'imagerie active ; et
mettre en œuvre un traitement sur les données d'image capturées de la zone d'imagerie active, **caractérisé en ce que** :
le traitement mis en œuvre sur les données d'image capturées est sélectionné en fonction de la zone d'imagerie active qui a été sélectionnée, un traitement spécifique étant attribué à chaque zone d'imagerie, dans lequel l'identification d'une sélection de la zone d'imagerie active est en fonction d'une analyse des données d'image reçues.

2. Dispositif de commande de capture d'image selon la revendication 1, dans lequel l'analyse des données d'image reçues comprend une identification de la localisation d'un objet au sein de l'environnement d'imagerie.

3. Dispositif de commande de capture d'image selon la revendication 1 ou 2, dans lequel l'analyse des données d'image reçues comprend une identification d'un marqueur visuel au sein de l'environnement d'imagerie.

4. Dispositif de commande de capture d'image selon la revendication 1, dans lequel le système de commande de capture d'image est configuré pour recevoir des données en provenance d'un dispositif de sélection de zone et dans lequel l'identification de la zone d'imagerie active est en fonction des données reçues en provenance du dispositif de sélection de zone.

5. Dispositif de commande de capture d'image selon la revendication 4, dans lequel le dispositif de sélection de zone comprend un ou plusieurs éléments interactifs localisés au sein de l'environnement d'imagerie.

6. Dispositif de commande de capture d'image selon la revendication 5, dans lequel le ou les éléments interactifs comprennent l'un parmi i) un commutateur câblé et/ou sans fil pour activation par un utilisateur au sein de l'environnement d'imagerie et dans lequel le système de commande de capture d'image est configuré pour identifier la zone d'imagerie active en fonction de l'activation ou ii) des capteurs de proximité pour identification d'une localisation d'un utilisateur au sein de l'environnement d'imagerie et dans lequel le système de commande de capture d'image est configuré pour identifier la zone d'imagerie active en fonction de la localisation de l'utilisateur ou iii) des capteurs de pression pour identification d'une localisation d'un utilisateur au sein de l'environnement d'imagerie et dans lequel le système de commande de capture d'image est configuré pour identifier la zone d'imagerie active en fonction de la localisation de l'utilisateur.

7. Dispositif de commande de capture d'image selon la revendication 1, dans lequel le système de commande de capture d'image est configuré en outre pour recevoir des données audio en provenance d'un ou plusieurs dispositifs de capture audio au sein de l'environnement d'imagerie.

8. Dispositif de commande de capture d'image selon la revendication 7, dans lequel l'identification de la zone d'imagerie active est en fonction d'une analyse des données audio reçues.

9. Dispositif de commande de capture d'image selon la revendication 7, dans lequel le système de commande de capture d'image est configuré pour i) moduler les données audio reçues en fonction de la zone d'imagerie active qui a été sélectionnée ou ii) horodater les données d'image reçues, les données audio reçues et un résultat du traitement mis en œuvre sur les données d'image de capture, et configuré en outre pour stocker les données horodatées dans un stockage.

10. Dispositif de commande de capture d'image selon la revendication 9, dans lequel lorsque l'image reçue est horodatée, le système de commande de capture d'image est configuré en outre pour construire un fichier de sortie, le fichier de sortie comprenant des données d'image et/ou audio horodatées provenant de l'environnement d'imagerie, et pour insérer des informations auxiliaires horodatées dans le fichier de sortie au niveau d'une localisation identifiée en fonction d'une comparaison des horodatages des données d'image et/ou audio à l'horodatage des informations auxiliaires.

11. Dispositif de commande de capture d'image selon la revendication 1, dans lequel la mise en œuvre d'un traitement sur les données d'image capturées comprend en outre le lancement d'une application configurée pour mettre en œuvre un traitement sur les données d'image capturées de la zone d'imagerie active en fonction de la zone d'imagerie active qui a été sélectionnée.

12. Dispositif de commande de capture d'image selon la revendication 1 ou 11, dans lequel le traitement mis en œuvre sur les données d'image capturées comprend un traitement d'analyse d'image.

13. Dispositif de commande de capture d'image selon la revendication 12, dans lequel le traitement d'analyse d'image comprend au moins l'un parmi un traitement d'extraction d'écriture manuscrite, un traitement de recouvrement d'image et un traitement de reconnaissance de geste.

14. Procédé de commande de capture d'image, le procédé comprenant :
la réception de données d'image (S9002) d'un environnement d'imagerie en provenance d'un dispositif de capture d'image ;
l'identification (S9004) d'une sélection d'une première zone d'imagerie d'une pluralité de zones d'imagerie préconfigurées au sein de l'environnement d'imagerie en tant que zone d'imagerie active ;
la commande (S9006) du dispositif de capture d'image en fonction de l'identification de la zone d'imagerie active pour capturer des données d'image de la zone d'imagerie active ; et
la mise en œuvre d'un traitement (S9008) sur les données d'image capturées de la zone d'imagerie active, **caractérisé en ce que** :
le traitement mis en œuvre sur les données d'image capturées est sélectionné en fonction de la zone d'imagerie active qui a été sélectionnée, un traitement spécifique étant attribué à chaque zone d'imagerie, dans lequel l'identification d'une sélection de la zone d'imagerie active est en fonction d'une analyse des données d'image reçues.

15. Produit programme d'ordinateur comprenant des instructions qui, lorsque le programme est exécuté par un ordinateur, amènent l'ordinateur à effectuer un procédé de commande de capture d'image, le procédé de commande de capture d'image comprenant :
la réception de données d'image (S9002) d'un environnement d'imagerie en provenance d'un dispositif de capture d'image ;
l'identification (S9004) d'une sélection d'une première zone d'imagerie d'une pluralité de zones d'imagerie préconfigurées au sein de l'environnement d'imagerie en tant que zone d'imagerie active ;
la commande (S9006) du dispositif de capture d'image en fonction de l'identification de la zone d'imagerie active pour capturer des données d'image de la zone d'imagerie active ; et
la mise en œuvre d'un traitement (S9008) sur les données d'image capturées de la zone d'imagerie active, **caractérisé en ce que** :
le traitement mis en œuvre sur les données d'image capturées est sélectionné en fonction de la zone d'imagerie active qui a été sélectionnée, un traitement spécifique étant attribué à chaque zone d'imagerie, dans lequel l'identification d'une sélection de la zone d'imagerie active est en fonction d'une analyse des données d'image reçues.
